(19) Europäisches Patentamt / European Patent Office / Office européen des brevets

(11) **EP 4 708 204 A1**

(12) **EUROPEAN PATENT APPLICATION**
published in accordance with Art. 153(4) EPC

(43) Date of publication:
**11.03.2026  Bulletin 2026/11**

(21) Application number: **24802849.0**

(22) Date of filing: **29.04.2024**

(51) International Patent Classification (IPC):
**G06T 15/06** (2011.01)

(52) Cooperative Patent Classification (CPC):
**G06T 15/06; G06F 7/485; G06F 7/487; G06F 7/78; G06T 3/06; G06T 7/73**

(86) International application number:
**PCT/CN2024/090693**

(87) International publication number:
**WO 2024/230567 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **05.05.2023  CN 202310493798**

(71) Applicant: **Moore Threads Technology Co., Ltd. Beijing 100036 (CN)**

(72) Inventor: **QI, Yue Beijing 100036 (CN)**

(74) Representative: **Cabinet Beau de Loménie 103, rue de Grenelle / CS 90800 75340 Paris Cedex 07 (FR)**

(54) **RAY TRACING METHOD, APPARATUS FOR RAY TRACING, DEVICE, COMPUTER-READABLE STORAGE MEDIUM, AND COMPUTER PROGRAM PRODUCT**

(57)     Provided in the embodiments of the present application are a ray tracing method, an apparatus for ray tracing, a device, a computer-readable storage medium, and a computer program product. The method comprises: projecting a ray and a triangle onto a plane coordinate system; according to the barycentric coordinate corresponding to an intersection point of the ray and the plane coordinate system, determining a positional relationship between the intersection point and a projected triangle of the triangle on the plane coordinate system; and under the condition that the intersection point is located at a common edge or a common vertex shared by the projected triangle and another triangle, determining whether the triangle is hit by the ray or not according to the coordinates of at least two vertexes of the projected triangle in the plane coordinate system.

100

Projecting a ray and a triangle onto a plane coordinate system — 110

Determining, according to barycentric coordinates corresponding to an intersection point of the ray and the plane coordinate system, a positional relationship between the intersection point and a projected triangle of the triangle on the plane coordinate system — 120

Determining, in response to the intersection point being located at a common edge or a common vertex shared by the projected triangle and other triangles projected to the plane coordinate system, whether the triangle is hit by the ray according to coordinates of at least two vertexes of the projected triangle in the plane coordinate system — 130

**FIG. 2**

## Description

### CROSS-REFERENCE TO RELATED APPLICATION

The present disclosure is based on and claims priority to Chinese Patent Application No. 202310493798.7, filed on May 5, 2023, and entitled "RAY TRACING METHOD, AND APPARATUS AND DEVICE FOR RAY TRACING", the entire content of which is incorporated herein by reference.

### TECHNICAL FIELD

Embodiments of the present disclosure relate to the field of image processing, and relate to a ray tracing method, an apparatus and device for ray tracing, a computer-readable storage medium, and a computer program product.

### BACKGROUND

Ray tracing is a common rendering technology, which produces a realistic image by projecting a ray to make it intersect with a test object, and coloring the test object according to a projection result. The basic geometric operation of ray tracing is to calculate an intersection point of the ray and a scene by testing all primitives in the scene. The primitives are usually triangles arranged into a spatial data structure to accelerate the efficiency of intersection, so this process is also called intersection detection of the ray and the triangles. The result of intersection detection directly affects the quality of the image. Therefore, how to improve the performance of intersection detection has become an urgent problem to be solved.

### SUMMARY

Embodiments of the present disclosure provide a ray tracing method, an apparatus and device for ray tracing, a computer-readable storage medium, and a computer program product, which can improve the performance of intersection detection of a ray and a triangle.

In a first aspect, the embodiments of the present disclosure provide a ray tracing method, including: projecting a ray and a triangle onto a plane coordinate system; determining, according to barycentric coordinates corresponding to an intersection point of the ray and the plane coordinate system, a positional relationship between the intersection point and a projected triangle of the triangle on the plane coordinate system; and determining, in response to the intersection point being located at a common edge or a common vertex shared by the projected triangle and other triangles projected onto the plane coordinate system, whether the triangle is hit by the ray according to coordinates of at least two vertexes of the projected triangle in the plane coordinate system.

Based on this technical solution, during intersection detection of the ray and the triangle, the ray and the triangle are projected onto the plane coordinate system, the positional relationship between the intersection point and the projected triangle of the triangle in the plane coordinate system is determined according to the barycentric coordinates corresponding to the intersection point of the ray and the plane coordinate system, and whether the ray hits the triangle is accurately determined according to the coordinates of at least two vertexes of the triangle in the plane coordinate system in response to the intersection point being located at the common edge or the common vertex of the projected triangle, thereby ensuring the stability of a result of intersection detection.

In some embodiments, determining, in response to the intersection point being located at the common edge or the common vertex shared by the projected triangle and other triangles projected onto the plane coordinate system, whether the triangle is hit by the ray according to the coordinates of at least two vertexes of the projected triangle in the plane coordinate system includes at least one of: determining, in response to the intersection point being located at the common edge, whether the common edge meets a predetermined condition according to coordinates of two vertexes of the common edge in the plane coordinate system, and determining that the triangle is hit by the ray in response to the common edge meeting the predetermined condition; and determining, in response to the intersection point being located at the common vertex, whether two edges corresponding to the common vertex meet the predetermined condition, and determining that the triangle is hit by the ray in response to both of the two edges corresponding to the common vertex meeting the predetermined condition.

In some embodiments, the predetermined condition includes at least one of: a predetermined relationship between Y-axis coordinates of two vertexes of the common edge or two vertexes of each edge corresponding to the common vertex in the plane coordinate system; or a predetermined relationship between X-axis coordinates of two vertexes of the common edge or two vertexes of each edge corresponding to the common vertex in the plane coordinate system.

In some embodiments, a winding direction of a vertex of the projected triangle is a clockwise CW direction, in the CW direction, the two vertexes of the common edge or the two vertexes of the edge corresponding to the common vertex are sequentially a first vertex and a second vertex of the projected triangle, and the predetermined condition includes one of: a Y-axis coordinate of the second vertex is greater than a Y-axis coordinate of the first vertex; or a Y-axis coordinate of the second vertex is equal to a Y-axis coordinate of the first vertex, and an X-axis coordinate of the second vertex is greater than an X-axis coordinate of the first vertex.

In some embodiments, a winding direction of a vertex of the projected triangle is a counter clockwise CCW direction, in the CCW direction, the two vertexes of the common edge or the two vertexes of an edge corresponding to the common vertex are sequentially a first vertex and a second vertex of the projected triangle, and the predetermined condition includes one of: a Y-axis coordinate of the first vertex is greater than a Y-axis coordinate of the second vertex; or a Y-axis coordinate of the first vertex is equal to a Y-axis coordinate of the second vertex, and an X-axis coordinate of the first vertex is greater than an X-axis coordinate of the second vertex.

In some embodiments, the method further includes: determining that the triangle is hit by the ray in response to the intersection point being located within the projected triangle.

In some embodiments, the plane coordinate system is perpendicular to the ray, and the intersection point is an origin of the plane coordinate system.

In some embodiments, the barycentric coordinates are configured to represent respective areas of three triangles formed by lines that connect the intersection point to three vertexes of the projected triangle.

In some embodiments, the barycentric coordinates are intended to represent proportions of respective areas of three triangles formed by lines that connect the intersection point to three vertexes of the projected triangle to an area of the projected triangle.

In some embodiments, the barycentric coordinates are: $U = Cx' \cdot By' - Cy' \cdot Bx'$; $V = Ax' \cdot Cy' - Ay' \cdot Cx'$; $W = Bx' \cdot Ay' - By' \cdot Ax'$; wherein $U$, V, and $W$ are the barycentric coordinates, $Ax'$ and $Ay'$ are an X-axis coordinate and a Y-axis coordinate of the first vertex of the projected triangle respectively, $Bx'$ and $By'$ are an X-axis coordinate and a Y-axis coordinate of the second vertex of the projected triangle respectively, and $Cx'$ and $Cy'$ are an X-axis coordinate and a Y-axis coordinate of a third vertex of the projected triangle respectively.

In some embodiments, determining, according to the barycentric coordinates corresponding to the intersection point of the ray and the plane coordinate system, the positional relationship between the intersection point and the projected triangle of the triangle on the plane coordinate system includes: determining, in response to one of $U$, $V$, and $W$ being 0, that the intersection point is located at an edge of the projected triangle; determining, in response to two of $U$, $V$, and $W$ being 0, that the intersection point is located at a vertex of the projected triangle; and determining, in response to $U$, $V$, and $W$ being all positive or $U$, $V$, and $W$ being all negative, that the intersection point is located within the projected triangle.

In some embodiments, prior to determining the positional relationship between the intersection point and the projected triangle of the triangle on the plane coordinate system, the method further includes: determining the barycentric coordinates based on a fusion multiplication and addition FMA operation, wherein the FMA operation includes a multiplication operation and an addition operation, wherein the multiplication operation is configured to multiply an input value of the FMA operation, the input value of the FMA operation being a single-precision floating-point number, the addition operation is configured to add a result of the multiplication operation, and the number of bits in the addition operation is greater than the number of bits in the multiplication operation.

In some embodiments, the number of bits in the addition operation is greater than or equal to 49.

In some embodiments, the number of exponential bits aligned prior to the addition operation is greater than or equal to 9.

In some embodiments, the FMA operation includes two multiplication operations for two sets of input values and an addition operation for results of the two multiplication operations, and prior to the addition operation, the FMA operation further includes a sign inversion operation for a result of one of the multiplication operations.

In some embodiments, the FMA operation further includes a rounding operation for a result of the addition operation, and an acquired output value of the FMA operation is the single-precision floating-point number.

In some embodiments, prior to determining the positional relationship between the intersection point and the projected triangle of the triangle on the plane coordinate system, the method further includes: determining a major dimension of the ray, and taking the major dimension as a Z axis of a three-dimensional coordinate system, wherein the major dimension is a dimension with a maximum absolute value; acquiring an origin of the ray located at an origin of the three-dimensional coordinate system by moving the ray and the triangle; acquiring a direction of the ray along the Z axis by transforming the ray and the triangle according to a transformation matrix; and projecting the triangle in the direction of the ray onto the plane coordinate system formed by an X axis and a Y axis.

In some embodiments, the transformation matrix includes a product of two scaling matrices and one shearing matrix.

In some embodiments, in response to the triangle being hit by the ray, the method further includes: determining a hitting distance of the ray in the three-dimensional coordinate system as follows according to the barycentric coordinates: $t = (U \cdot A_z' + V \cdot B_z' + W \cdot C_z') / det$; wherein $t$ is the hitting distance, $U$, $V$, and $W$ are the barycentric coordinates, and $A_z'$, $B_z'$,

and $C_z{}'$ are respectively Z-axis coordinates of the first vertex, the second vertex and the third vertex of the triangle in the three-dimensional coordinate system prior to projection of the triangle onto the plane coordinate system.

In a second aspect, the embodiments of the present disclosure provide a ray tracing method, including: projecting a ray and a triangle onto a plane coordinate system; determining, according to an FMA operation, barycentric coordinates corresponding to an intersection point of the ray and the plane coordinate system, wherein the FMA operation includes a multiplication operation and an addition operation, wherein the multiplication operation is configured to multiply an input value of the FMA operation, the input value of the FMA operation is a single-precision floating-point number, the addition operation is configured to add a result of the multiplication operation, and the number of bits in the addition operation is greater than the number of bits in the multiplication operation; and determining, according to the barycentric coordinates, whether the triangle is hit by the ray or not.

Based on this technical solution, during intersection detection of the ray and the triangle, the ray and the triangle are projected onto the plane coordinate system, the barycentric coordinates corresponding to the intersection point of the ray and the plane coordinate system are determined by using the FMA operation, and whether the triangle is hit by the ray or not is determined based on the barycentric coordinates. Since the barycenter coordinates are calculated using the FMA operation, which includes the multiplication operation and the addition operation, and the number of bits used in the addition operation is greater than the number of bits in the single-precision floating-point number input during the multiplication operation, internal precision loss in the calculation of the barycenter coordinates is eliminated, and the barycenter coordinates can be accurately acquired, thereby ensuring the water tightness of the result of intersection detection.

In some embodiments, the number of bits in the addition operation is greater than or equal to 49.

In some embodiments, the number of exponential bits aligned prior to the addition operation is greater than or equal to 9.

In some embodiments, the FMA operation includes two multiplication operations for two sets of input values and an addition operation for the results of the two multiplication operations, and prior to the addition operation, the FMA operation further includes a sign inversion operation for a result of one of the multiplication operations.

In some embodiments, the FMA operation further includes a rounding operation for a result of the addition operation, and an acquired output value of the FMA operation is the single-precision floating-point number.

In some embodiments, prior to determining the barycentric coordinates corresponding to the intersection point of the ray and the plane coordinate system, the method further includes: determining a major dimension of the ray, and taking the major dimension as a Z axis of a three-dimensional coordinate system, wherein the major dimension is a dimension with a maximum absolute value; acquiring an origin of the ray located at an origin of the three-dimensional coordinate system by moving the ray and the triangle; acquiring a direction of the ray along the Z axis by transforming the ray and the triangle according to a transformation matrix; and projecting the triangle in the direction of the ray onto the plane coordinate system formed by an X axis and a Y axis.

In some embodiments, the transformation matrix includes a product of two scaling matrices and one shearing matrix.

In some embodiments, after determining that the triangle is hit by the ray, the method further includes: determining a hitting distance of the ray in the three-dimensional coordinate system as follows according to the barycentric coordinates: $t = (U \cdot A_z{}' + V \cdot B_z{}' + W \cdot C_z{}')/det$, wherein $t$ is the hitting distance, $U$, $V$, and $W$ are the barycentric coordinates, and $A_z{}'$, $B_z{}'$, and $C_z{}'$ are respectively Z-axis coordinates of the first vertex, the second vertex and a third vertex of the triangle in the three-dimensional coordinate system prior to projection of the triangle onto the plane coordinate system.

In a third aspect, the embodiments of the present disclosure provide an apparatus for ray tracing, including: a first processing section, configured to project a ray and a triangle onto a plane coordinate system, and determine, according to barycentric coordinates corresponding to an intersection point of the ray and the plane coordinate system, a positional relationship between the intersection point and a projected triangle of the triangle on the plane coordinate system; and a second processing section, configured to determine, in response to the intersection point being located at a common edge or a common vertex shared by the projected triangle and other triangles projected onto the plane coordinate system, whether the triangle is hit by the ray according to coordinates of at least two vertexes of the projected triangle in the plane coordinate system.

In some embodiments, the second processing section is configured to: determine, in response to the intersection point being located at the common edge, whether the common edge meets a predetermined condition according to coordinates of two vertexes of the common edge in the plane coordinate system, and determine that the triangle is hit by the ray in response to the common edge meeting the predetermined condition; or determine, in response to the intersection point being located at the common vertex, whether two edges corresponding to the common vertex meet the predetermined condition, and determine that the triangle is hit by the ray in response to both of the two edges corresponding to the common vertex meeting the predetermined condition.

In some embodiments, the predetermined condition includes at least one of: a predetermined relationship between Y-axis coordinates of two vertexes of the common edge or two vertexes of each edge corresponding to the common vertex in the plane coordinate system; or a predetermined relationship between X-axis coordinates of two vertexes of the common edge or two vertexes of each edge corresponding to the common vertex in the plane coordinate system.

In some embodiments, a winding direction of a vertex of the projected triangle is a clockwise CW direction, in the CW direction, the two vertexes of the common edge or the two vertexes of an edge corresponding to the common vertex are sequentially a first vertex and a second vertex of the projected triangle, and the predetermined condition includes one of: a Y-axis coordinate of the second vertex is greater than a Y-axis coordinate of the first vertex; or a Y-axis coordinate of the second vertex is equal to a Y-axis coordinate of the first vertex, and an X-axis coordinate of the second vertex is greater than an X-axis coordinate of the first vertex.

In some embodiments, a winding direction of a vertex of the projected triangle is a counter clockwise CCW direction, in the CCW direction, the two vertexes of the common edge or the two vertexes of an edge corresponding to the common vertex are sequentially a first vertex and a second vertex of the projected triangle, and the predetermined condition includes one of: a Y-axis coordinate of the first vertex is greater than a Y-axis coordinate of the second vertex; or a Y-axis coordinate of the first vertex is equal to a Y-axis coordinate of the second vertex, and an X-axis coordinate of the first vertex is greater than an X-axis coordinate of the second vertex.

In some embodiments, the second processing section is also configured to: determine that the triangle is hit by the ray in response to the intersection point being located within the projected triangle.

In some embodiments, the plane coordinate system is perpendicular to the ray, and the intersection point is an origin of the plane coordinate system.

In some embodiments, the barycentric coordinates are configured to represent respective areas of three triangles formed by lines that connect the intersection point to three vertexes of the projected triangle.

In some embodiments, the barycentric coordinates are configured to represent proportions of respective areas of three triangles formed by lines that connect the intersection point to three vertexes of the projected triangle to an area of the projected triangle.

In some embodiments, the barycentric coordinates are: $U = Cx' \cdot By' - Cy' \cdot Bx'$; $V = Ax' \cdot Cy' - Ay' \cdot Cx'$; $W = Bx' \cdot Ay' - By' \cdot Ax'$; wherein $U$, V, and $W$ are the barycentric coordinates, $Ax'$ and Ay are an X-axis coordinate and a Y-axis coordinate of the first vertex of the projected triangle respectively, $Bx'$ and By are an X-axis coordinate and a Y-axis coordinate of the second vertex of the projected triangle respectively, and $Cx'$ and Cy are an X-axis coordinate and a Y-axis coordinate of a third vertex of the projected triangle respectively.

In some embodiments, the first processing section is configured to: determine, in response to one of $U$, V, and $W$ being 0, that the intersection point is located at an edge of the projected triangle; determine, in response to two of $U$, V, and W being 0, that the intersection point is located at a vertex of the projected triangle; and determine, in response to U, V, and W being all positive or $U$, $V$ and W being all negative, that the intersection point is located within the projected triangle.

In some embodiments, the first processing section is also configured to: determine the barycentric coordinates based on a fusion multiplication and addition FMA operation, wherein the FMA operation includes a multiplication operation and an addition operation, wherein the multiplication operation is configured to multiply an input value of the FMA operation, the input value of the FMA operation is being a single-precision floating-point number, the addition operation is configured to add a result of the multiplication operation, and the number of bits in the addition operation is greater than the number of bits in the multiplication operation.

In some embodiments, the number of bits in the addition operation is greater than or equal to 49.

In some embodiments, the number of exponential bits aligned prior to the addition operation is greater than or equal to 9.

In some embodiments, the FMA operation includes two multiplication operations for two sets of input values and an addition operation for results of the two multiplication operations, and prior to the addition operation, the FMA operation further includes a sign inversion operation for a result of one of the multiplication operations.

In some embodiments, the FMA operation further includes a rounding operation for a result of the addition operation, and an acquired output value of the FMA operation is the single-precision floating-point number.

In some embodiments, the first processing section is also configured to: determine a major dimension of the ray, and take the major dimension as a Z axis of a three-dimensional coordinate system, wherein the major dimension is a dimension with a maximum absolute value; acquire an origin of the ray located at an origin of the three-dimensional coordinate system by moving the ray and the triangle; acquire a direction of the ray along the Z axis by transforming the ray and the triangle according to a transformation matrix; and project the triangle in the direction of the ray onto the plane coordinate system formed by an X axis and a Y axis.

In some embodiments, the transformation matrix includes a product of two scaling matrices and one shearing matrix.

In some embodiments, the first processing section is also configured to: determine a hitting distance of the ray in the three-dimensional coordinate system as follows according to the barycentric coordinates: $t = (U \cdot A_z' + V \cdot B_z' + W \cdot C_z') / det$, wherein $t$ is the hitting distance, $U$, V, and $W$ are the barycentric coordinates, and $A_z'$, $B_z'$, and $C_z'$ are respectively Z-axis coordinates of the first vertex, the second vertex and the third vertex of the triangle in the three-dimensional coordinate system prior to projection of the triangle onto the plane coordinate system.

In a fourth aspect, an embodiment of the present disclosure provides an apparatus for ray tracing, including: a first processing section, configured to project a ray and a triangle onto a plane coordinate system, and determine, according to an FMA operation, barycentric coordinates corresponding to an intersection point of the ray and the plane coordinate system, wherein the FMA operation includes a multiplication operation and an addition operation, wherein the multiplication operation is configured to multiply an input value of the FMA operation, the input value of the FMA operation being a single-precision floating-point number, the addition operation is configured to add a result of the multiplication operation, and the number of bits in the addition operation is greater than the number of bits in the multiplication operation; and a second processing section configured to determine, according to the barycentric coordinates, whether the triangle is hit by the ray or not.

In some embodiments, the number of bits in the addition operation is greater than or equal to 49.

In some embodiments, the number of exponential bits aligned prior to the addition operation is greater than or equal to 9.

In some embodiments, the FMA operation includes two multiplication operations for two sets of input values and an addition operation for the results of the two multiplication operations, and prior to the addition operation, the FMA operation further includes a sign inversion operation for a result of one of the multiplication operations.

In some embodiments, the FMA operation further includes a rounding operation for a result of the addition operation, and an acquired output value of the FMA operation is the single-precision floating-point number.

In some embodiments, the first processing section is also configured to: determine a major dimension of the ray, and take the major dimension as a Z axis of a three-dimensional coordinate system, wherein the major dimension is a dimension with a maximum absolute value; acquire an origin of the ray located at an origin of the three-dimensional coordinate system by moving the ray and the triangle; acquire a direction of the ray along the Z axis by transforming the ray and the triangle according to a transformation matrix; and project the triangle in the direction of the ray onto the plane coordinate system formed by an X axis and a Y axis.

In some embodiments, the transformation matrix includes a product of two scaling matrices and one shearing matrix.

In some embodiments, after determining that the triangle is hit by the ray, the first processing section is also configured to: determine a hitting distance of the ray in the three-dimensional coordinate system according to the barycentric coordinates.

In a fifth aspect, the embodiments of the present disclosure provide a device for ray tracing, including a processor and a memory, wherein the memory stores a computer program executable on the processor, and the program, when executed by the processor, causes the processor to implement the steps in the method as described in the first aspect or any embodiment in the first aspect, and to implement the steps in the method as described in the second aspect or any embodiment in the second aspect.

In a sixth aspect, the embodiments of the present disclosure provide a computer-readable storage medium having a computer program stored thereon, wherein the computer program, when executed by a processor, causes the processor to implement the steps in the method as described in the first aspect or any embodiment in the first aspect, and to implement the steps in the method as described in the second aspect or any embodiment in the second aspect.

In a seventh aspect, the embodiments of the present disclosure provide a computer program product, including a computer program or an instruction, wherein the computer program or the instruction, when executed by a processor, causes the processor to implement the steps in the method as described in the first aspect or any embodiment in the first aspect, and to implement the steps in the method as described in the second aspect or any embodiment in the second aspect.

In an eighth aspect, the embodiments of the present disclosure provide a chip, including a processor, wherein the processor is configured to call and execute a computer program from a memory, to implement the steps in the method as described in the first aspect or any embodiment in the first aspect, and to implement the steps in the method as described in the second aspect or any embodiment in the second aspect.

It is to be understood that both of the foregoing general descriptions and the following detailed descriptions are exemplary and explanatory only and are not restrictive of the present disclosure.

## BRIEF DESCRIPTION OF DRAWINGS

The accompanying drawings, which are incorporated in and constitute a part of the description, illustrate embodiments consistent with the present disclosure and, together with the description, serve to explain the technical solutions of the present disclosure.

FIG. 1 is a schematic structural diagram of a BVH;

FIG. 2 is a schematic flowchart of a ray tracing method according to an embodiment of the present disclosure;

FIG. 3 is a schematic diagram of a process of intersection detection of a ray and a triangle according to some embodiments of the present disclosure;

FIG. 4 is a schematic diagram of a process of intersection detection of a ray and a triangle according to some embodiments of the present disclosure;

FIG. 5 is a schematic diagram showing that a common edge of the triangle is hit by the ray according to some embodiments of the present disclosure;

FIG. 6 is a schematic diagram showing that a common edge of the triangle is hit by the ray according to some embodiments of the present disclosure;

FIG. 7 is a schematic diagram showing that a common edge of the triangle is hit by the ray according to some embodiments of the present disclosure;

FIG. 8 is a schematic diagram showing that a common edge of the triangle is hit by the ray according to some embodiments of the present disclosure;

FIG. 9 is a schematic diagram showing that a common vertex of the triangle is hit by the ray and not hit by the ray according to some embodiments of the present disclosure;

FIG. 10 is a schematic flowchart of a ray tracing method according to another embodiment of the present disclosure;

FIG. 11 is a schematic diagram of an FMA operation unit according to some embodiments of the present disclosure; and

FIG. 12 is a schematic block diagram of an apparatus for ray tracing according to some embodiments of the present disclosure.

## DETAILED DESCRIPTION

The technical solutions in the present disclosure will be described below with reference to the accompanying drawings.

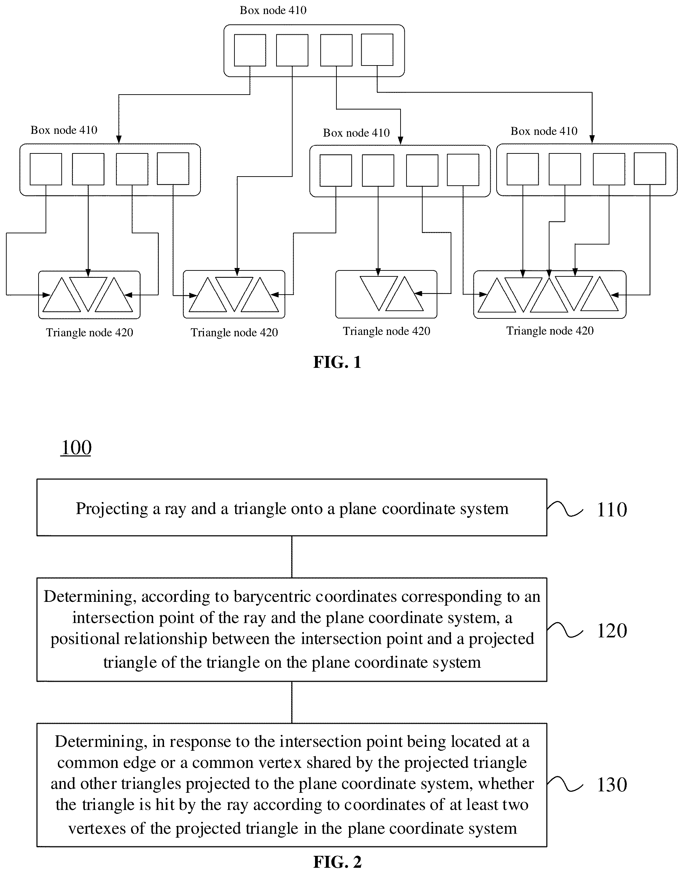

Ray of light is defined as ray in a ray tracing system and includes an origin and a direction. In the present disclosure, "ray" is used to refer to ray of light in the ray tracing technology. A data structure of a bounding volume hierarchy (BVH) is usually used in ray tracing to accelerate intersection of a ray and a scene. FIG. 1 is a schematic structural diagram of the BVH. BVH is a tree-like structure, which, for example, as shown in FIG. 1, includes different types of nodes, including but not limited to box nodes 410 and triangle nodes 420. The box nodes 410 are usually internal nodes, and the triangle nodes 420 are leaves that store primitives in the scene. In the bounding box, each box closely surrounds the primitives in the leaves, and then these boxes are recursively grouped into larger bounding boxes, to finally form the tree-like structure. There is only one bounding box at the top of the tree.

Generally, based on intersection detection of the ray and the box, whether the ray hits the bounding box inside the box node 410 can be determined; and based on intersection detection of the ray and the triangle, whether the ray hits the triangle inside the triangle node 420 can be determined.

However, as the scene becomes more and more complex, during intersection detection of the ray and the triangle, a small triangle or a subdivided tiny target may be far away from the origin of the ray. In the case of insufficient accuracy of calculation, cracks may appear between triangles, i.e., the triangles that originally adjoin each other may be a certain distance from each other due to the problem of poor calculation accuracy.

In addition to the problem of poor accuracy, during intersection detection of the ray and the triangle, it is also necessary to solve the problem that the ray hits a common edge or a common vertex of the plurality of triangles. In the case where the ray hits the common edge or the common vertex of the plurality of triangles, it is necessary to determine which triangle is hit by the ray.

Therefore, the embodiments of the present disclosure provide a solution for intersection detection of the ray and the triangle. In the case where the ray hits the common edge or the common vertex of the triangle, whether the triangle is hit by the ray is determined by using coordinates of the vertex of the triangle, to solve the problem that the ray hits the common edge or the common vertex of the plurality of triangles and ensure the stability of a result of intersection detection.

In addition, the embodiments of the present disclosure also provide a solution for intersection detection of the ray and the triangle, which, based on the fusion multiplication and addition (FMA) operation, calculates the barycenter coordinates corresponding to the intersection point of the ray and the triangle, and increases the number of bits of the addition operation in the FMA operation to eliminate internal precision loss in the calculation of the barycenter coordinates, thereby accurately acquiring the barycenter coordinates and ensuring the water tightness of the result of intersection detection.

FIG. 2 is a schematic flowchart of a ray tracing method according to an embodiment of the present disclosure. The ray tracing method 100 is applicable to a hardware accelerator, for example, a hardware accelerator on a graphics processing unit (GPU), for games and other visualization applications. As shown in FIG. 2, the ray tracing method 100 may include some or all of the following steps.

In step 110, a ray and a triangle are projected onto a plane coordinate system.

For example, the plane coordinate system is perpendicular to the ray, and an intersection point of the ray and the plane coordinate system is an origin of the plane coordinate system. That is, the triangle is projected onto the plane coordinate system in a direction perpendicular to the ray.

In step 120, according to barycentric coordinates corresponding to an intersection point of the ray and the plane coordinate system, a positional relationship between the intersection point and a projected triangle of the triangle on the plane coordinate system is determined.

In step 130, in response to the intersection point being located at a common edge or a common vertex shared by the projected triangle and other triangles projected onto the plane coordinate system, whether the triangle is hit by the ray is determined according to coordinates of at least two vertexes of the projected triangle in the plane coordinate system.

During intersection detection of the ray and the triangle, the ray and the triangle are projected onto the plane coordinate system. The positional relationship between the intersection point and the projected triangle of the triangle in the plane coordinate system is determined according to the barycentric coordinates corresponding to the intersection point of the ray and the plane coordinate system. The intersection point may be located within the projected triangle, outside the projected triangle, at a vertex of the projected triangle, or at an edge of the projected triangle. Since a plurality of triangles may share an edge or a vertex, whether the ray hits the triangle can be accurately determined according to the coordinates of at least two vertexes of the projected triangle when the intersection point is located at the common edge or the common vertex of the projected triangle, thereby ensuring the stability of the result of intersection detection.

It can be understood that since a transformation matrix used in the projection is linear, the positional relationships between the ray and the triangle prior to and after the projection are the same, i.e., the positional relationship between the ray and the triangle prior to the projection is the same as the positional relationship between the intersection point of the ray and the plane coordinate system and the projected triangle after the projection onto the plane coordinate system. For example, in the case where the ray hits an edge of the triangle, the intersection point is also located at the edge of the projected triangle after projection; in the case where the ray hits a vertex of the triangle, the intersection point is also located on the vertex of the projected triangle after projection; and in the case where the ray hits the inside of the triangle, the intersection point is also located within the projected triangle after projection.

Before step 120, it is necessary to acquire the barycenter coordinates corresponding to the intersection point of the ray and the plane coordinate system based on the process of intersection detection of the ray and the triangle.

For intersection detection of the ray and the triangle, it is necessary to define one ray and one triangle. Usually, the ray may be transformed from a world space to an object space of geometry. After that, the ray and the triangle should be located in the same three-dimensional coordinate system. After transformation, the ray and the triangle may be projected onto a selected plane coordinate system, for example, an XY coordinate system. There is an intersection point between the ray and the plane coordinate system, and its corresponding barycenter coordinates may be calculated from known projection parameters. For example, the barycenter coordinates corresponding to the intersection point are calculated according to X-axis coordinates and Y-axis coordinates of three vertexes of the projected triangle of the triangle.

As an example, in the embodiments of the present disclosure, the barycenter coordinates may be determined based on the following described method for intersection detection of the ray and the triangle.

First, the ray and the triangle are defined in the object space.

The ray is represented by an origin $\vec{o}$, a direction $\vec{d}$, and a parameter t, i.e., a formula (1):

$$ray(t) = \vec{o} + t * \vec{d} \qquad \text{Formula (1)}$$

in which $\vec{o} = (o_x, o_y, o_z)$, $\vec{d} = (d_x, d_y, d_z)$, and $T\min \leq t \leq T\max$.

$T\min$ and $T\max$ are a minimum value and a maximum value respectively, $o_x$, $o_y$, $o_z$ are coordinates of the origin $\vec{o}$ on an X axis, a Y axis, and a Z axis respectively, and $d_x$, $d_y$, $d_z$ are coordinates of the direction $\vec{d}$ on the X axis, the Y axis, and the Z axis respectively.

The triangle is represented by three vertexes, namely, $\vec{a} = (a_x, a_y, a_z)$, $\vec{b} = (b_x, b_y, b_z)$, and $\vec{c} = (c_x, c_y, c_z)$.

Here, $a_x$, $a_y$, $a_z$ are coordinates of a vertex $\vec{a}$ on the X axis, the Y axis, and the Z axis respectively, $b_x$, $b_y$, $b_z$ are coordinates of a vertex $\vec{b}$ on the X axis, the Y axis, and the Z axis respectively, and $c_x$, $c_y$, $c_z$ are coordinates of a vertex $\vec{c}$ on the X axis, the Y axis, and the Z axis respectively.

The intersection detection of the ray and the triangle is performed by the following steps.

In step 101, a major dimension of the direction of the ray is determined. For example, a dimension with a maximum absolute value is taken as the major dimension, i.e., a formula (2):

$$major = \begin{cases} Dim_x \,, if \, |d_x| = \max\left(|d_x|,|d_y|,|d_z|\right) \\ Dim_y , if \, |d_y| = \max\left(|d_x|,|d_y|,|d_z|\right) \\ Dim_z , if \, |d_z| = \max\left(|d_x|,|d_y|,|d_z|\right) \end{cases}$$

Formula (2)

in which *major* is the major dimension, and $Dim_x$, $Dim_y$, and $Dim_z$ are dimensions of the X axis, the Y axis, and the Z axis respectively.

In step 102, the axes are swizzled, such that the major dimension becomes the Z axis of the three-dimensional coordinate system. In order to maintain the winding order, it is necessary to swap the X axis and Y axis in the case where the direction of the ray of the major dimension is negative, i.e., a formula (3):

$$swizzleOrder = \begin{cases} (y,z,x), & if \quad major = Dim_x \quad and \quad d_x \geq 0 \\ (z,y,x), & if \quad major = Dim_x \quad and \quad d_x < 0 \\ (z,x,y), & if \quad major = Dim_y \quad and \quad d_y \geq 0 \\ (x,z,y), & if \quad major = Dim_y \quad and \quad d_y < 0 \\ (x,y,z), & if \quad major = Dim_z \quad and \quad d_z \geq 0 \\ (y,x,z), & if \quad major = Dim_z \quad and \quad d_z < 0 \end{cases}$$

Formula (3)

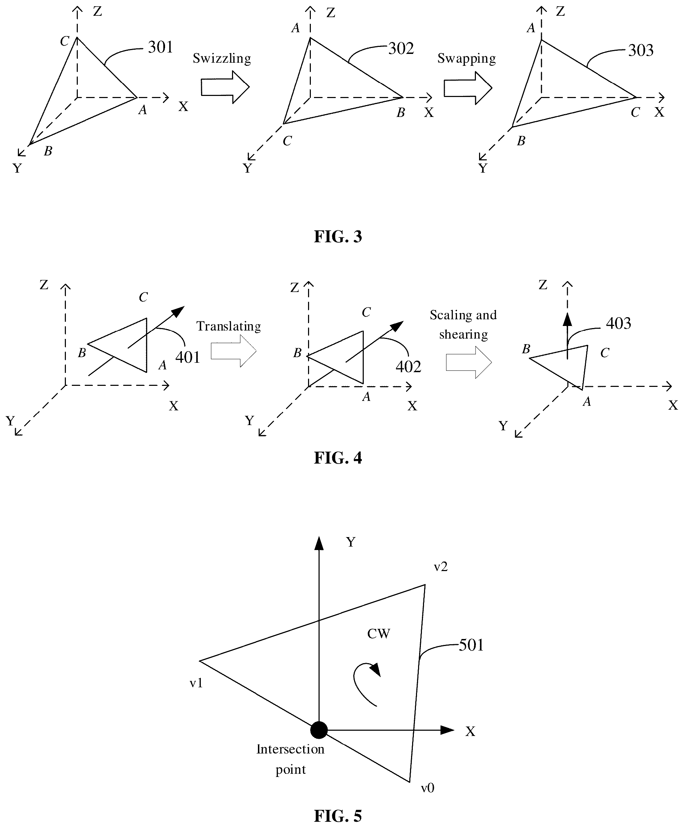

FIG. 3 is a schematic diagram of a process of intersection detection of a ray and a triangle according to some embodiments of the present disclosure, and FIG. 3 shows the process of step 101 and step 102. FIG. 3 takes the major dimension being $Dim_x$ and $d_x < 0$ as an example. In FIG. 3, the three vertexes of the triangle 301, namely, a vertex $A$, a vertex B, and a vertex C, are located on the X axis, the Y axis, and the Z axis respectively. After swizzling, a triangle 302 is acquired, in which the vertex $A$, the vertex B, and the vertex C are located on the Z axis, the X axis, and the Y axis respectively. By swapping the positions of the vertex B and the vertex C, a triangle 303 is acquired.

After that, an origin O of the ray is expressed as a formula (4):

$$O = Swizzle(\vec{o}) = \left(O_x, O_y, O_z\right)$$

Formula (4)

in which $O_x$, $O_y$, $O_z$ are the coordinates of the origin O on the X axis, the Y axis, and the Z axis after swizzling.

A direction D is expressed as a formula (5):

$$D = Swizzle(\vec{d}) = \left(D_x, D_y, D_z\right)$$

Formula (5)

in which $D_x$, $D_y$, $D_z$ are the coordinates of the direction $D$ on the X axis, the Y axis, and the Z axis after swizzling.

The vertex $A$, the vertex B, and the vertex C of the triangle are expressed as formulas (6) to (8) respectively:

$$A = Swizzle(\vec{a}) = \left(A_x, A_y, A_z\right)$$

Formula (6)

$$B = Swizzle\left(\vec{b}\right) = \left(B_x, B_y, B_z\right)$$

Formula (7)

$$C = Swizzle\left(\vec{c}\right) = \left(C_x, C_y, C_z\right)$$

Formula (8)

in which $A_x$, $A_y$, $A_z$ are coordinates of the vertex $A$ on the X axis, the Y axis, and the Z axis after swizzling, $B_x$, $B_y$, $B_z$ are coordinates of the vertex $B$ on the X axis, the Y axis, and the Z axis after swizzling, and $C_x$, $C_y$, $C_z$ are coordinates of the vertex C on the X axis, the Y axis, and the Z axis after swizzling.

In step 103, the ray and the triangle are moved to cause the origin of the ray to be located at the origin of the three-dimensional coordinate system, thereby transforming to a ray space.

At the moment, the origin of the ray becomes (0, 0, 0), and the direction of the ray is still $D = (D_x, D_y, D_z)$.

The vertexes of the triangle are expressed as formulas (9) to (11) respectively:

$$A' = \left(A - O\right)$$

Formula (9)

$$B' = \left(B - O\right)$$

Formula (10)

$$C' = \left(C - O\right)$$

Formula (11)

In step 104, the ray and the triangle are transformed according to the transformation matrix to cause the direction of the ray to be along the Z axis. For example, the transformation matrix includes a product of two scaling matrices and one shearing matrix, i.e., a formula (12):

$$M = \begin{pmatrix} 1 & 0 & 0 \\ 0 & 1 & -D_y \\ 0 & 0 & 1 \end{pmatrix} \begin{pmatrix} 1 & 0 & -D_x \\ 0 & 1 & 0 \\ 0 & 0 & 1 \end{pmatrix} \begin{pmatrix} 1 & 0 & 0 \\ 0 & 1 & 0 \\ 0 & 0 & 1/D_z \end{pmatrix}$$

Formula (12).

Since shearing introduces a smaller rounding error, the calculation efficiency is higher in use of the transformation matrix.

After steps 103 and 104, the origin of the ray becomes (0, 0, 0) and the direction of the ray becomes (0, 0, 1), i.e., the ray becomes a unit vector pointing to a positive direction of the Z axis.

The vertexes of the triangle are expressed as formulas (13) to (15) respectively:

$$A' = M * \left(A - O\right)$$

Formula (13)

$$B' = M * \left(B - O\right)$$

Formula (14)

$$C' = M * \left(C - O\right)$$

Formula (15).

FIG. 4 is a schematic diagram of a process of intersection detection of a ray and a triangle according to some embodiments of the present disclosure, and FIG. 4 shows the process of step 103 and step 104. In FIG. 4, an origin of a ray 401 is translated to the origin of the three-dimensional coordinate system to acquire the position of a ray 402, and scaling and shearing are performed by using a transformation matrix, such that a direction of a ray 403 is in the positive direction of the Z axis.

In step 105, the triangle is projected onto a plane coordinate system in a ray space in the direction of the ray, i.e., a plane coordinate system formed by the X axis and the Y axis, to acquire its projected triangle, and barycentric coordinates are calculated.

In some embodiments, the barycentric coordinates are expressed as formulas (16) to (18):

$$U = Cx' \cdot By' - Cy' \cdot Bx' \qquad \text{Formula (16)}$$

$$V = Ax' \cdot Cy' - Ay' \cdot Cx' \qquad \text{Formula (17)}$$

$$W = Bx' \cdot Ay' - By' \cdot Ax' \qquad \text{Formula (18)}$$

in which U, V, and W are the barycentric coordinates, $Ax'$ and $Ay'$ are an X-axis coordinate and a Y-axis coordinate of a first vertex of the projected triangle respectively, $Bx'$ and $By'$ are an X-axis coordinate and a Y-axis coordinate of a second vertex of the projected triangle respectively, and $Cx'$ and $Cy'$ are an X-axis coordinate and a Y-axis coordinate of a third vertex of the projected triangle respectively. For example, the first vertex, the second vertex, and the third vertex respectively correspond to the vertex A, the vertex B, and the vertex C mentioned above.

For example, U, V, and W may represent respective areas of three small triangles formed by lines that connect the intersection point of the ray and the plane coordinate system to the first vertex, the second vertex, and the third vertex of the projected triangle. In the following, U, V, and W may also be replaced by u, v, and w respectively, and u, v, and w are acquired by normalizing U, V, and W respectively. For example, u, v, and w represent proportions of the respective areas of the three triangles formed by lines that connect the intersection point to the first vertex, the second vertex, and the third vertex of the projected triangle to an area of the projected triangle, and at the moment, u+v+w=1.

The area of the triangle may change prior to and after the projection, which is equivalent to scaling the triangle. However, proportions of respective areas of three small triangles formed by lines that connect a hitting point of the ray on the triangle and the three vertexes of the triangle to the total area of the triangle prior to the projection are respectively the same as the proportions of the respective areas of the three small triangles formed by the lines that connect the intersection point to the three vertexes of the projected triangle to the total area of the projected triangle after the projection.

Next, the above step 120 is executed, i.e., the positional relationship between the intersection point and the projected triangle is determined according to the values of U, V, and W. For example, the positional relationship may include the following:

a) the intersection point is located within the projected triangle in response to U, V, and W being all positive or U, V, and W being all negative;
b) the intersection point is located outside the projected triangle in response to U, V, and W being partially positive and negative;
c) the intersection point is located at an edge of the projected triangle in response to one of U, V, and W being 0;
d) the intersection point is located at a vertex of the projected triangle in response to two of U, V, and W being 0; and
e) in response to U, V, and W being all 0, the ray and the triangle are coplanar, i.e., the intersection point is lost.

In step 106, a determinant is calculated, i.e., a formula (19):

$$\det = U+V+W \qquad \text{Formula (19).}$$

In step 107, a hitting distance of the ray in the three-dimensional coordinate system is determined according to the barycentric coordinates in response to the ray hitting the triangle, i.e., a formula (20):

$$t = (U \cdot A_z' + V \cdot B_z' + W \cdot C_z') / det \qquad \text{Formula (20)}$$

in which t is the hitting distance, U, V, and W are the barycentric coordinates, and $A_z$, $B_z'$ and $C_z'$ are respectively Z-axis coordinates of the first vertex, the second vertex and the third vertex of the triangle in the three-dimensional coordinate system prior to projection of the triangle onto the plane coordinate system.

In the above case a), i.e., in response to the intersection point being located within the projected triangle, it is determined that the triangle is hit by the ray.

In the above cases b) and e), it is determined that the triangle is not hit by the ray.

In the above cases c) and d), i.e., the intersection point is located at the edge or the vertex of the projected triangle. In response to an edge where the intersection point is located being the common edge of the projected triangle, i.e., the projected triangle sharing the edge with other triangles projected into the same plane coordinate system, it is necessary to determine whether the triangle is hit by the ray through the above step 120; and in response to a vertex where the intersection point is located being the common vertex of the projected triangle, i.e., the projected triangle sharing the vertex with other triangles, it is necessary to determine whether the triangle is hit by the ray through the above step 120.

In some embodiments, in the step 120, whether the common edge meets a predetermined condition is determined according to coordinates of two vertexes of the common edge in the plane coordinate system in response to the intersection point of the ray and the plane coordinate system being located at the common edge of the projected triangle, and it is determined that the triangle is hit by the ray in response to the common edge meeting the predetermined condition; and

whether two edges corresponding to the common vertex meet the predetermined condition is determined in response to the intersection point of the ray and the plane coordinate system being located at the common vertex of the projected triangle, and it is determined that the triangle is hit by the ray in response to the two edges corresponding to the common vertex meeting the predetermined condition.

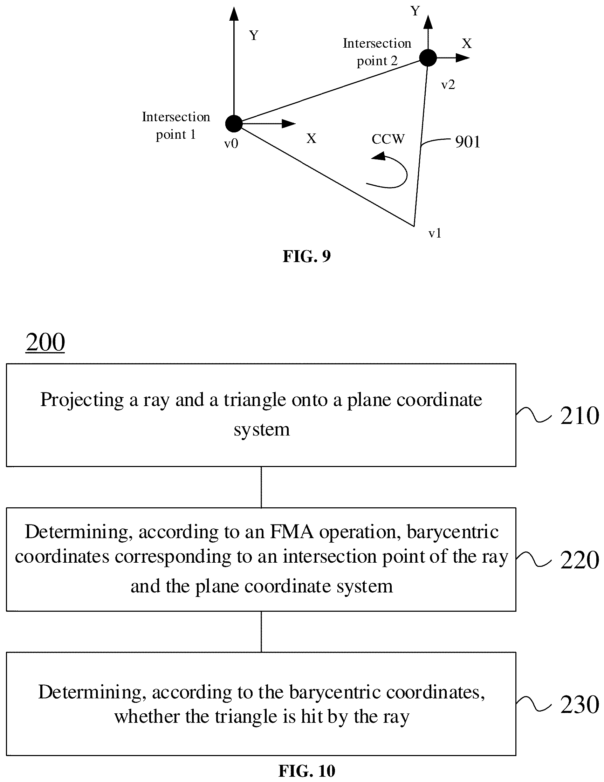

FIGS. 5 to 8 are schematic diagrams showing that a common edge of a triangle is hit by a ray according to some embodiments of the present disclosure, and FIG. 9 is a schematic diagram showing that a common vertex of a triangle is hit by a ray and is not hit by a ray according to some embodiments of the present disclosure. In the following, with reference to FIGS. 5 to 9, a detailed description of how to determine whether the ray hits the triangle according to coordinates of at least two vertexes of the projected triangle will be made for two cases where the intersection point is located at the common edge and the intersection point is located at the common vertex.

The winding direction, or a winding order, of the projected triangle includes a clockwise (CW) direction and a counter clockwise (CCW) direction, and the winding direction of the projected triangle may be determined based on a sign of the determinant acquired by the above calculation. For example, the projected triangle is in the CW direction in response to the sign of the determinant being positive, and the projected triangle is in the CCW direction in response to the sign of the determinant being negative; alternatively, the projected triangle is in the CCW direction in response to the sign of the determinant being positive, and the projected triangle is in the CW direction in response to the sign of the determinant being negative.

For example, the predetermined condition includes: a predetermined relationship between Y-axis coordinates of two vertexes of the common edge or two vertexes of each edge corresponding to the common vertex in the plane coordinate system; and a predetermined relationship between X-axis coordinates of two vertexes of the common edge or two vertexes of each edge corresponding to the common vertex in the plane coordinate system.

The predetermined condition in the case where the projected triangle is in the CW direction is different from, for example, may be opposite to, the predetermined condition in the case where the projected triangle is in the CW direction.

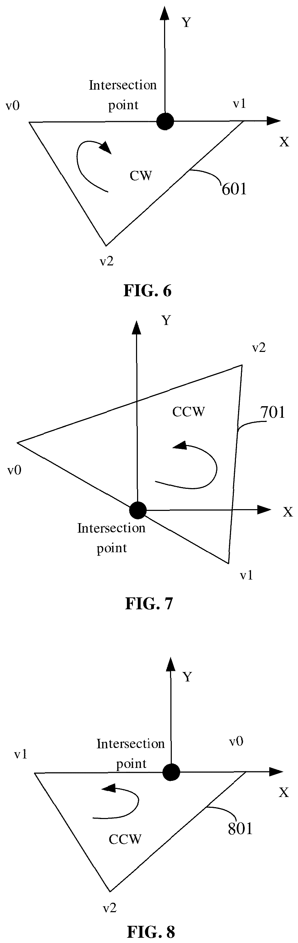

FIGS. 5 and 6 show the case where the winding direction is the CW direction, and FIGS. 7 to 9 show the case where the winding direction is the CCW direction.

In some embodiments, when a winding direction of a vertex of the projected triangle is the CW direction, and in the CW direction, two vertexes of the common edge where the intersection point is located, or two vertexes of an edge corresponding to the common vertex where the intersection point is located are sequentially a first vertex v0 and a second vertex v1 of the projected triangle, the predetermined condition in step 120 includes:

a Y-axis coordinate of the second vertex v1 is greater than a Y-axis coordinate of the first vertex v0; and

a Y-axis coordinate of the second vertex v1 is equal to a Y-axis coordinate of the first vertex v0, and an X-axis coordinate of the second vertex v1 is greater than an X-axis coordinate of the first vertex.

For example, as shown in FIG. 5, v0, v1, and v2 are a first vertex, a second vertex, and a third vertex of a projected triangle 501 in the plane coordinate system respectively. As shown in FIG. 5, when a winding direction of the projected triangle 501 is the CW direction, the intersection point of the ray and the plane coordinate system is located at a common edge v0v1 of the projected triangle, and the Y-axis coordinate of the second vertex v1 is greater than the Y-axis coordinate of the first vertex v0, i.e., v1.y>v0.y, the common edge v0v1 is called a left boundary.

For example, as shown in FIG. 6, when a winding direction of a projected triangle 601 is the CW direction, the intersection point of the ray and the plane coordinate system is located at a common edge v0v1 of the projected triangle, the Y-axis coordinate of the second vertex v1 is equal to the Y-axis coordinate of the first vertex v0, and the X-axis coordinate of the second vortex v1 is greater than the X-axis coordinate of the first vertex, i.e., v1.y>v0.y, and v1.x>v0.x, the common edge v0v1 is called an upper boundary.

In the case where the common edge v0v1 is the left boundary or the upper boundary, i.e., the common edge v0v1 meets a predetermined condition of the left boundary or the upper boundary, it is believed that the ray hits the common edge v0v1.

In some embodiments, when a winding direction of a vertex of the projected triangle is the CCW direction, and in the CCW direction, two vertexes of the common edge, or two vertexes of an edge corresponding to the common vertex are sequentially a first vertex v0 and a second vertex v1 of the projected triangle, the predetermined condition in step 120 includes:

a Y-axis coordinate of the first vertex v0 is greater than a Y-axis coordinate of the second vertex v1; and
a Y-axis coordinate of the first vertex v0 is equal to a Y-axis coordinate of the second vertex v1, and an X-axis coordinate of the first vertex v0 is greater than an X-axis coordinate of the second vertex v1.

For example, as shown in FIG. 7, v0, v1, and v2 are a first vertex, a second vertex, and a third vertex of a projected triangle 701 in the plane coordinate system respectively. As shown in FIG. 7, when a winding direction of the projected triangle 701 is the CCW direction, the intersection point of the ray and the plane coordinate system is located at a common edge v0v1 of the projected triangle, and the Y-axis coordinate of the first vertex v0 is greater than the Y-axis coordinate of the second vertex v1, i.e., v0.y>v1.y, the common edge v0v1 is called a left boundary.

For example, as shown in FIG. 8, when a winding direction of a projected triangle 801 is the CCW direction, the intersection point of the ray and the plane coordinate system is located at a common edge v0v1 of the projected triangle 801, the Y-axis coordinate of the first vertex v0 is equal to the Y-axis coordinate of the second vertex v1, and the X-axis coordinate of the first vortex v0 is greater than the X-axis coordinate of the second vertex v1, i.e., v0.y>v1.y, and v0.x>v1.x, the common edge v0v1 is called an upper boundary.

In the case where the common edge v0v1 is the left boundary or the upper boundary, i.e., the common edge v0v1 meets a predetermined condition of the left boundary or the upper boundary, it is believed that the ray hits the common edge v0v1.

That is, in the case where a plurality of triangles in the plane coordinate system have a common edge, in which of the triangles the common edge belongs to the left boundary or the upper boundary of the triangle is determined based on the above method, and it is believed that the ray hits the triangle but does not hit other triangles.

In addition, in the case where the intersection point of the ray and the plane coordinate system is located at the common vertex of the triangle, it is necessary to perform the above judgment on the two edges corresponding to the common vertex, i.e., to determine whether the two edges meet the predetermined condition of the left boundary or the upper boundary as described above.

For example, as shown in FIG. 9, when a winding direction of a projected triangle 901 is the CCW direction, and the intersection point of the ray and the plane coordinate system is located at a common vertex v0 of the projected triangle 901, i.e., an intersection point 1, two edges corresponding to the common vertex v0 are v0v1 and v2v0 respectively. For the edge v0v1, when the Y-axis coordinate of the first vertex v0 is greater than the Y-axis coordinate of the second vertex v1, i.e., v0.y>v1.y, the edge v0v1 is the left boundary. For the edge v2v0, when the Y-axis coordinate of the third vertex v2 is greater than the Y-axis coordinate of the first vertex v0, i.e., v2.y>v0.y, the edge v2v0 is also the left boundary. Therefore, the triangle is hit by the ray.

When the intersection point of the ray and the plane coordinate system is located at a common vertex v2 of the projected triangle 901, i.e., an intersection point 2, two edges corresponding to the common vertex v0 are v1v2 and v2v0 respectively. For the edge v2v0, when the Y-axis coordinate of the third vertex v2 is greater than the Y-axis coordinate of the first vertex v0, i.e., v2.y>v0.y, the edge v2v0 is also the left boundary. However, for the edge v1v2, when the Y-axis coordinate of the second vertex v1 is smaller than the Y-axis coordinate of the third vertex v2, i.e., v1.y<v2.y, the edge v1v2 is not the left boundary. Therefore, the two edges corresponding to the common vertex v2 do not both meet the predetermined conditions of the left boundary and the upper boundary. Therefore, the triangle is not hit by the ray.

As can be seen, since the result of intersection detection of the ray and the triangle is deterministic, an uncertainty brought about by the ray hitting the common edge or common vertex of the plurality of triangles is eliminated, ensuring the stability of the result of intersection detection, which is also referred to as robustness herein.

As described above, the barycentric coordinates play a crucial role in the result of intersection detection of the ray and the triangle, and the hitting position of the ray in the triangle. Therefore, the embodiments of the present disclosure also provide a solution for intersection detection of a ray and a triangle, to improve the calculation accuracy of the barycentric coordinates and ensure the water tightness of the result of intersection detection.

The embodiments of the present disclosure also provide a ray tracing method 200. The ray tracing method 200 is applicable to a hardware accelerator, for example, a hardware accelerator on a GPU, for games and other visualization applications. FIG. 10 is a schematic flowchart of a ray tracing method according to another embodiment of the present disclosure. As shown in FIG. 10, the ray tracing method 200 includes some or all of the following steps.

In step 210, a ray and a triangle are projected onto a plane coordinate system.

In step 220, barycenter coordinates corresponding to an intersection point of the ray and the plane coordinate system are determined according to an FMA operation.

In step 230, whether the triangle is hit by the ray is determined according to the barycenter coordinates.

The FMA operation includes a multiplication operation and an addition operation. The multiplication operation is configured to multiply an input value of the FMA operation, the input value of the FMA operation is a single-precision floating-point number, the addition operation is configured to add a result of the multiplication operation, and the number of bits in the addition operation is greater than the number of bits in the multiplication operation.

During intersection detection of the ray and the triangle, the ray and the triangle are projected onto the plane coordinate system, the barycentric coordinates corresponding to the intersection point of the ray and the plane coordinate system are determined by using the FMA operation, and whether the triangle is hit by the ray is determined based on the barycentric coordinates. Since the barycenter coordinates are calculated using the FMA operation, the FMA operation includes the multiplication operation and the addition operation, and the number of bits used in the addition operation is greater than the number of bits of the single-precision floating-point number input during the multiplication operation, internal precision loss in the calculation of the barycenter coordinates is eliminated, and the barycenter coordinates can be accurately acquired, thereby ensuring the water tightness of the result of intersection detection.

For example, the number of bits in the addition operation may be greater than or equal to 49.

In some embodiments, the number of exponential bits aligned prior to the addition operation is greater than or equal to 9. In this way, it can be ensured that overflow or underflow may not occur prior to the addition operation.

Based on the aforementioned formulas of $U$, $V$, and $W$, i.e., $U = Cx' \cdot By' - Cy' \cdot Bx'$, $V = Ax' \cdot Cy' - Ay' \cdot Cx'$, and $W = Bx' \cdot Ay' - By' \cdot Ax'$, the FMA operation may be defined as A[0]*B[0]-A[1]*B[1]. That is, the FMA operation specifically includes two multiplication operations for two sets of input values and an addition operation for results of the two multiplication operations. Prior to the addition operation, the FMA operation further includes a sign inversion operation for the result of one of the multiplication operations. The FMA operation does not support a subnormal number. In response to the input value of the FMA operation being an irregular number, the input value may be refreshed to 0. In order to make an output value of the FMA operation also a single-precision floating-point number, the FMA operation further includes a rounding operation for the result of the addition operation.

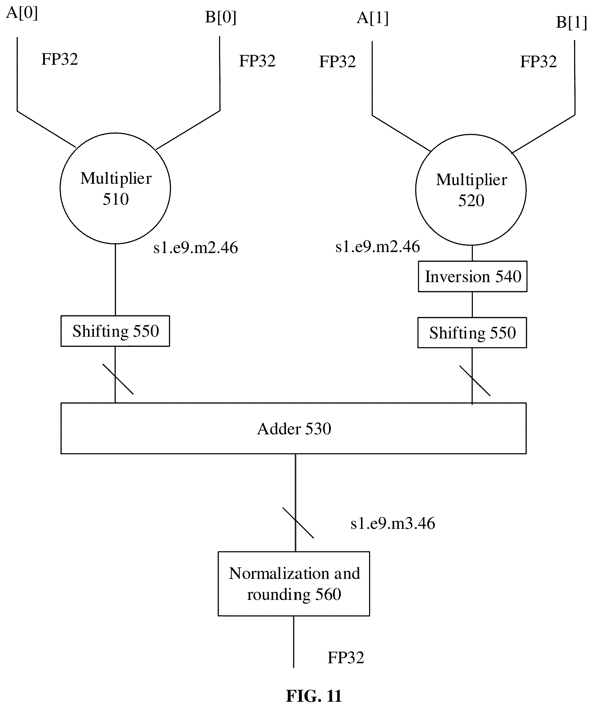

FIG. 11 is a schematic diagram of an FMA operation unit according to some embodiments of the present disclosure. The FMA operation unit includes two multipliers (510 and 520) and one adder 530. The input value of the FMA operation unit is a single-precision floating-point number. Generally, the single-precision floating-point number is called FP32, which includes 1 sign bit, 8 exponential bits, 23 mantissa bits, and 1 leading bit. Generally, the floating-point number FP32 is represented by s1.e8.m1.23, and the result of multiplication of two floating-point numbers FP32 is represented by s1.e9.m2.46 herein.

After the two multipliers (510 and 520) perform the multiplication operation on the input values A[0] and B[0] and perform the multiplication operation on input values A[1] and B[1] respectively, two values in the format of s1.e9.m2.46 are acquired, i.e., A[0]*B[0] and A[1]*B[1]. After that, the exponential bits are aligned by a shifting operation 550, for example, >>, and the aligned exponential bits may be greater than or equal to 9. Finally, the adder 530 performs the addition operation on the value of A[0]*B[0] and the value of -A[1]*B[1] to acquire a value in the format of s 1.e9.m3.46. A normalization and rounding operation 560 is performed on results output by the adder, and the output value of the FMA operation unit is FP32.

The method 200 is applicable to a hardware accelerator. The hardware accelerator, due to its high cost, is usually not provided with a double-precision operation unit. However, when the method 200 is adopted to calculate the barycentric coordinates, even if a single-precision floating-point operation is used, there may be no cracks between the triangles due to the problem of poor accuracy of calculation.

Both of the ray tracing method 100 and the ray tracing method 200 provided by the embodiments of the present disclosure can improve the performance of intersection detection of the ray and the triangle. According to the ray tracing method 100, in the case where the intersection point of the ray and the plane coordinate system is located at the common edge or the common vertex of the projected triangle, whether the ray hits the triangle can be accurately determined, thus ensuring the robustness of the result of intersection detection; and according to the ray tracing method 200, the accuracy in calculating the barycenter coordinates is improved, and the water tightness of the result of intersection detection is ensured.

The ray tracing method 100 and the ray tracing method 200 can be performed independently or in combination with each other. For example, in the case of calculating the barycenter coordinates corresponding to the intersection point of the ray and the plane coordinate system, the FMA operation may be adopted to meet the requirement for water tightness. Moreover, in the case of determining that the intersection point is located at the common edge or the common vertex of the projected triangle according to the barycenter coordinates, whether the triangle is hit by the ray can be determined according to the coordinates of at least two vertexes of the projected triangle in the plane coordinate system, thereby meeting the requirement for robustness.

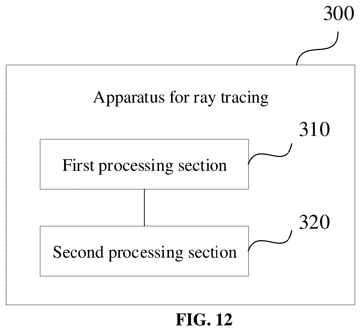

An embodiment of the present disclosure also provides an apparatus for ray tracing. FIG. 12 is a schematic block diagram of the apparatus for ray tracing according to some embodiments of the present disclosure. As shown in FIG. 12, the apparatus 300 for ray tracing includes a first processing section 310 and a second processing section 320.

The first processing section 310 is configured to project a ray and a triangle onto a plane coordinate system, and determine, according to barycentric coordinates corresponding to an intersection point of the ray and the plane coordinate system, a positional relationship between the intersection point and a projected triangle of the triangle on the plane coordinate system.

The second processing section 320 is configured to determine, in response to the intersection point being located at a common edge or a common vertex shared by the projected triangle and other triangles projected onto the plane coordinate system, whether the triangle is hit by the ray according to coordinates of at least two vertexes of the projected triangle in the plane coordinate system.

In some embodiments, the second processing section 320 is configured to: determine, in response to the intersection point being located at the common edge, whether the common edge meets a predetermined condition according to coordinates of two vertexes of the common edge in the plane coordinate system, and determine that the triangle is hit by the ray in response to the common edge meeting the predetermined condition; and determine, in response to the intersection point being located at the common vertex, whether two edges corresponding to the common vertex meet the predetermined condition, and determine that the triangle is hit by the ray in response to both of the two edges corresponding to the common vertex meeting the predetermined condition.

In some embodiments, the predetermined condition includes at least one of: a predetermined relationship between Y-axis coordinates of at least two vertexes of the projected triangle in the plane coordinate system; or a predetermined relationship between X-axis coordinates of at least two vertexes of the projected triangle in the plane coordinate system.

In some embodiments, the at least two vertexes of the projected triangle include two vertexes of the common edge or two vertexes of an edge corresponding to the common vertex.

In some embodiments, a winding direction of a vertex of the projected triangle is a CW direction, in the CW direction, the two vertexes of the common edge or the two vertexes of an edge corresponding to the common vertex are sequentially a first vertex and a second vertex of the projected triangle, and the predetermined condition includes one of: a Y-axis coordinate of the second vertex is greater than a Y-axis coordinate of the first vertex; or a Y-axis coordinate of the second vertex is equal to a Y-axis coordinate of the first vertex, and an X-axis coordinate of the second vertex is greater than an X-axis coordinate of the first vertex.

In some embodiments, a winding direction of a vertex of the projected triangle is a CCW direction, in the CCW direction, the two vertexes of the common edge or the two vertexes of an edge corresponding to the common vertex are sequentially a first vertex and a second vertex of the projected triangle, and the predetermined condition includes one of: a Y-axis coordinate of the first vertex is greater than a Y-axis coordinate of the second vertex; or a Y-axis coordinate of the first vertex is equal to a Y-axis coordinate of the second vertex, and an X-axis coordinate of the first vertex is greater than an X-axis coordinate of the second vertex.

In some embodiments, the second processing section 320 is also configured to: determine that the triangle is hit by the ray in response to the intersection point being located within the projected triangle.

In some embodiments, the barycentric coordinates are expressed as formulas (21) to (23):

$$U = Cx' \cdot By' - Cy' \cdot Bx' \qquad \text{Formula (21)}$$

$$V = Ax' \cdot Cy' - Ay' \cdot Cx' \qquad \text{Formula (22)}$$

$$W = Bx' \cdot Ay' - By' \cdot Ax' \qquad \text{Formula (23)}$$

in which U, V, and W are the barycentric coordinates, $Ax'$ and $Ay'$ are an X-axis coordinate and a Y-axis coordinate of the first vertex of the projected triangle respectively, Bx and By are an X-axis coordinate and a Y-axis coordinate of the second vertex of the projected triangle respectively, and $Cx'$ and Cy are an X-axis coordinate and a Y-axis coordinate of the third vertex of the projected triangle respectively.

In some embodiments, the first processing section is configured to: determine, in response to one of $U$, V, and $W$ being 0, that the intersection point is located at an edge of the projected triangle; determine, in response to two of $U$, V, and W being 0, that the intersection point is located at a vertex of the projected triangle; and determine, in response to U, V, and W being all positive or $U$, V and W being all negative that the intersection point is located within the projected triangle.

In some embodiments, the first processing section 310 is also configured to: determine the barycentric coordinates based on an FMA operation, wherein the FMA operation includes a multiplication operation and an addition operation, wherein the multiplication operation is configured to multiply an input value of the FMA operation, the input value of the FMA operation being a single-precision floating-point number, the addition operation is configured to add a result of the multiplication operation, and the number of bits in the addition operation is greater than the number of bits in the multiplication operation.

In some embodiments, the number of bits in the addition operation is greater than or equal to 49.

In some embodiments, the number of exponential bits aligned prior to the addition operation is greater than or equal to 9.

In some embodiments, the FMA operation includes two multiplication operations for two sets of input values and an addition operation for results of the two multiplication operations, and prior to the addition operation, the FMA operation further includes a sign inversion operation for a result of one of the multiplication operations.

In some embodiments, the FMA operation further includes a rounding operation for a result of the addition operation, and an acquired output value of the FMA operation is the single-precision floating-point number.

In some embodiments, the first processing section 310 is also configured to: determine a major dimension of the ray, and take the major dimension as a Z axis of a three-dimensional coordinate system, wherein the major dimension is a dimension with a maximum absolute value; acquire an origin of the ray located at an origin of the three-dimensional coordinate system by moving the ray and the triangle; acquire a direction of the ray along the Z axis by transforming the ray and the triangle according to a transformation matrix; and project the triangle in the direction of the ray onto the plane coordinate system formed by an X axis and a Y axis.

In some embodiments, the transformation matrix includes a product of two scaling matrices and one shearing matrix.

In some embodiments, the first processing section 310 is also configured to: determine a hitting distance of the ray in the three-dimensional coordinate system as a formula (24) according to the barycentric coordinates:

$$t = (U \cdot A_z' + V \cdot B_z' + W \cdot C_z') / det \qquad \text{Formula (24)}$$

,

in which $t$ is the hitting distance, $U$, V, and W are the barycentric coordinates, and $A_z'$, $B_z'$, and $C_z'$ are respectively Z-axis coordinates of the first vertex, the second vertex and the third vertex of the triangle in the three-dimensional coordinate system prior to projection of the triangle onto the plane coordinate system.

Specific details in the apparatus 300 for ray tracing can refer to the above descriptions of the method embodiments, which will not be repeated herein for brevity.

The embodiments of the present disclosure also provide a device for ray tracing, including a processor and a memory. The memory stores a computer program executable on the processor, and the program, when executed by the processor, causes the processor to implement the steps in the method according to any one of the above embodiments. For example, the processor may be a GPU.

The embodiments of the present disclosure also provide a computer-readable storage medium having a computer program stored thereon. The computer program, when executed by a processor, causes the processor to implement the steps in the method according to any one of the above embodiments. For example, the computer-readable storage medium is a memory.

The embodiments of the present disclosure also provide a computer program product, including a computer program or an instruction. The computer program or the instruction, when executed by a processor, causes the processor to implement the steps in the method according to any one of the above embodiments.

The embodiments of the present disclosure also provide a chip, including a processor. The processor is configured to call and execute a computer program from a memory, so as to implement the steps in the method according to any one of the above embodiments. For example, the chip may be a GPU.

The memory described above may be a volatile memory or a non-volatile memory, or the memory may include both a volatile memory and a non-volatile memory. The volatile memory includes, for example, a random access memory (RAM); and the non-volatile memory includes, for example, a read-only memory (ROM), a programmable ROM (PROM), an erasable PROM (EPROM), an electrically EPROM (EEPROM), or a flash memory.

It should be noted that, under the premise of no conflict, the various embodiments and/or the technical features in the various embodiments described in the present disclosure can be arbitrarily combined with each other, and the technical solutions obtained after the combination shall also fall within the scope of protection of the present disclosure.

The systems, apparatuses, and methods disclosed in the embodiments of the present disclosure may be implemented in other ways. For example, some features of the method embodiments described above may be ignored or not executed. The apparatus embodiments described above are merely schematic, and the division of parts is merely a logical functional division. In actual implementation, there may be other ways of division, and multiple parts or assemblies may be combined or integrated into another system. In addition, the coupling between the parts or the coupling between the assemblies may be direct coupling or indirect coupling, and the coupling includes electrical, mechanical, or other forms of connection.

It can be clearly understood by those skilled in the art that, for the convenience and brevity of description, a reference may be made to the corresponding processes and technical effects in the foregoing method embodiments for the specific working processes and technical effects of the apparatus and the device described above, which will not be repeated herein.

It should be understood that the specific examples in the embodiments of the present disclosure are only intended to help those skilled in the art to better understand the embodiments of the present disclosure, rather than to limit the scope of the embodiments of the present disclosure. Those skilled in the art can make various improvements and modifications based on the above embodiments, and these improvements or modifications shall fall within the scope of protection of the present disclosure.

Described above are merely specific embodiments of the present disclosure, but the scope of protection of the present disclosure is not limited thereto. Any variations or substitutions that are readily conceivable by those skilled in the art within the technical scope of the present disclosure should fall within the scope of protection of the present disclosure. Therefore, the scope of protection of the present disclosure shall be subject to the scope of protection defined by the claims.

Industrial applicability

Provided in the embodiments of the present disclosure are a ray tracing method, an apparatus and device for ray tracing, a computer-readable storage medium, and a computer program product, which can improve the performance of intersection detection of a ray and a triangle. The method includes: projecting a ray and a triangle onto a plane coordinate system; determining, according to barycentric coordinates corresponding to an intersection point of the ray and the plane coordinate system, a positional relationship between the intersection point and a projected triangle of the triangle on the plane coordinate system; and determining, in response to the intersection point being located at a common edge or a common vertex shared by the projected triangle and other triangles, whether the triangle is hit by the ray according to the coordinates of at least two vertexes of the projected triangle in the plane coordinate system. In this way, whether the ray hits the triangle can be accurately determined, ensuring the stability of a result of intersection detection.

**Claims**

1.   A ray tracing method, applied to a ray tracing device, and comprising:

projecting a ray and a triangle onto a plane coordinate system;
determining, according to barycentric coordinates corresponding to an intersection point of the ray and the plane coordinate system, a positional relationship between the intersection point and a projected triangle of the triangle on the plane coordinate system; and
determining, in response to the intersection point being located at a common edge or a common vertex shared by the projected triangle and other triangles projected onto the plane coordinate system, whether the triangle is hit by the ray according to coordinates of at least two vertexes of the projected triangle in the plane coordinate system.

2.   The method according to claim 1, wherein determining, in response to the intersection point being located at the common edge or the common vertex shared by the projected triangle and other triangles projected onto the plane coordinate system, whether the triangle is hit by the ray according to the coordinates of at least two vertexes of the projected triangle in the plane coordinate system comprises at least one of:

determining, in response to the intersection point being located at the common edge, whether the common edge meets a predetermined condition according to coordinates of two vertexes of the common edge in the plane coordinate system, and determining that the triangle is hit by the ray in response to the common edge meeting the predetermined condition; or
determining, in response to the intersection point being located at the common vertex, whether two edges corresponding to the common vertex meet the predetermined condition, and determining that the triangle is hit by the ray in response to both of the two edges corresponding to the common vertex meeting the predetermined condition.

3.   The method according to claim 2, wherein the predetermined condition comprises at least one of:

a predetermined relationship between Y-axis coordinates of two vertexes of the common edge or two vertexes of an edge corresponding to the common vertex in the plane coordinate system; or

a predetermined relationship between X-axis coordinates of two vertexes of the common edge or two vertexes of an edge corresponding to the common vertex in the plane coordinate system.

4. The method according to claim 3, wherein a winding direction of a vertex of the projected triangle is a clockwise CW direction, in the CW direction, the two vertexes of the common edge or the two vertexes of the edge corresponding to the common vertex are sequentially a first vertex and a second vertex of the projected triangle, and the predetermined condition comprises one of:

a Y-axis coordinate of the second vertex is greater than a Y-axis coordinate of the first vertex; or

a Y-axis coordinate of the second vertex is equal to a Y-axis coordinate of the first vertex, and an X-axis coordinate of the second vertex is greater than an X-axis coordinate of the first vertex.

5. The method according to claim 3, wherein a winding direction of a vertex of the projected triangle is a counter clockwise CCW direction, in the CCW direction, the two vertexes of the common edge or the two vertexes of the edge corresponding to the common vertex are sequentially a first vertex and a second vertex of the projected triangle, and the predetermined condition comprises one of:

a Y-axis coordinate of the first vertex is greater than a Y-axis coordinate of the second vertex; or

a Y-axis coordinate of the first vertex is equal to a Y-axis coordinate of the second vertex, and an X-axis coordinate of the first vertex is greater than an X-axis coordinate of the second vertex.

6. The method according to any one of claims 1 to 5, further comprising:
determining that the triangle is hit by the ray in response to the intersection point being located within the projected triangle.

7. The method according to any one of claims 1 to 5, wherein the plane coordinate system is perpendicular to the ray, and the intersection point is an origin of the plane coordinate system.

8. The method according to any one of claims 1 to 5, wherein the barycentric coordinates are configured to represent respective areas of three triangles formed by lines that connect the intersection point to three vertexes of the projected triangle.

9. The method according to any one of claims 1 to 5, wherein the barycentric coordinates are configured to represent proportions of respective areas of three triangles formed by lines that connect the intersection point to three vertexes of the projected triangle to an area of the projected triangle.

10. The method according to any one of claims 1 to 5, wherein the barycentric coordinates are:

$$U = Cx' \cdot By' - Cy' \cdot Bx';$$

$$V = Ax' \cdot Cy' - Ay' \cdot Cx';$$

$$W = Bx' \cdot Ay' - By' \cdot Ax';$$

wherein $U$, $V$, and $W$ are the barycentric coordinates, $Ax'$ and $Ay'$ are an X-axis coordinate and a Y-axis coordinate of the first vertex of the projected triangle respectively, $Bx'$ and $By'$ are an X-axis coordinate and a Y-axis coordinate of the second vertex of the projected triangle respectively, and $Cx'$ and $Cy'$ are an X-axis coordinate and a Y-axis coordinate of a third vertex of the projected triangle respectively.

11. The method according to claim 10, wherein determining, according to the barycentric coordinates corresponding to the intersection point of the ray and the plane coordinate system, the positional relationship between the intersection point and the projected triangle of the triangle on the plane coordinate system comprises:

> determining, in response to one of *U,* V, and W being 0, that the intersection point is located at an edge of the projected triangle;
> determining, in response to two of *U,* V, and W being 0, that the intersection point is located at a vertex of the projected triangle; and
> determining, in response to *U,* V, and W being all positive or *U,* V, and W being all negative, that the intersection point is located within the projected triangle.

12. The method according to any one of claims 1 to 5, wherein prior to determining the positional relationship between the intersection point and the projected triangle of the triangle on the plane coordinate system, the method further comprises:
determining the barycentric coordinates based on a fusion multiplication and addition FMA operation, wherein the FMA operation comprises a multiplication operation and an addition operation, wherein the multiplication operation is configured to multiply an input value of the FMA operation, the input value of the FMA operation being a single-precision floating-point number, the addition operation is configured to add a result of the multiplication operation, and the number of bits in the addition operation is greater than the number of bits in the multiplication operation.

13. The method according to claim 12, wherein the number of bits in the addition operation is greater than or equal to 49.

14. The method according to claim 12, wherein the number of exponential bits aligned prior to the addition operation is greater than or equal to 9.

15. The method according to claim 12, wherein the FMA operation comprises two multiplication operations for two sets of input values and an addition operation for results of the two multiplication operations, and prior to the addition operation, the FMA operation further comprises a sign inversion operation for a result of one of the multiplication operations.

16. The method according to claim 12, wherein the FMA operation further comprises a rounding operation for a result of the addition operation, and an acquired output value of the FMA operation is the single-precision floating-point number.

17. The method according to any one of claims 1 to 5, wherein prior to determining the positional relationship between the intersection point and the projected triangle of the triangle on the plane coordinate system, the method further comprises:

> determining a major dimension of the ray, and taking the major dimension as a Z axis of a three-dimensional coordinate system, wherein the major dimension is a dimension with a maximum absolute value;
> acquiring an origin of the ray located at an origin of the three-dimensional coordinate system by moving the ray and the triangle;
> acquiring a direction of the ray along the Z axis by transforming the ray and the triangle according to a transformation matrix; and
> projecting the triangle in the direction of the ray onto the plane coordinate system formed by an X axis and a Y axis.

18. The method according to claim 17, wherein the transformation matrix comprises a product of two scaling matrices and one shearing matrix.

19. The method according to claim 17, wherein in response to the triangle being hit by the ray, the method further comprises:

> determining a hitting distance of the ray in the three-dimensional coordinate system as follows according to the barycentric coordinates:

$$t = (U \cdot A_z^{'} + V \cdot B_z^{'} + W \cdot C_z^{'}) / det$$

> wherein *t* is the hitting distance, *U,* V, and W are the barycentric coordinates, $A_z^{'}$, $B_z^{'}$, and $C_z^{'}$ are respectively Z-axis coordinates of a first vertex, a second vertex, and a third vertex of the triangle in the three-dimensional coordinate system prior to projection of the triangle onto the plane coordinate system.

20. An apparatus for ray tracing, comprising:

a first processing section, configured to project a ray and a triangle onto a plane coordinate system, and determine, according to barycentric coordinates corresponding to an intersection point of the ray and the plane coordinate system, a positional relationship between the intersection point and a projected triangle of the triangle on the plane coordinate system; and

a second processing section, configured to determine, in response to the intersection point being located at a common edge or a common vertex shared by the projected triangle and other triangles projected onto the plane coordinate system, whether the triangle is hit by the ray according to coordinates of at least two vertexes of the projected triangle in the plane coordinate system.

21. A device for ray tracing, comprising a processor and a memory, wherein the memory stores a computer program executable on the processor, and the program, when executed by the processor, causes the processor to implement steps in the method as defined in any one of claims 1 to 19.

22. A computer-readable storage medium having a computer program stored thereon, wherein the computer program, when executed by a processor, causes the processor to implement steps in the method as defined in any one of claims 1 to 19.

23. A chip, comprising a processor, wherein the processor is configured to call and execute a computer program from a memory, so as to implement steps in the method as defined in any one of claims 1 to 19.

24. A computer program product, comprising a computer program or an instruction, wherein the computer program or the instruction, when executed by a processor, causes the processor to implement steps in the method as defined in any one of claims 1 to 19.

Box node 410

Box node 410

Box node 410

Box node 410

Triangle node 420        Triangle node 420        Triangle node 420        Triangle node 420

**FIG. 1**

<u>100</u>

Projecting a ray and a triangle onto a plane coordinate system          110

Determining, according to barycentric coordinates corresponding to an intersection point of the ray and the plane coordinate system, a positional relationship between the intersection point and a projected triangle of the triangle on the plane coordinate system          120

Determining, in response to the intersection point being located at a common edge or a common vertex shared by the projected triangle and other triangles projected to the plane coordinate system, whether the triangle is hit by the ray according to coordinates of at least two vertexes of the projected triangle in the plane coordinate system          130

**FIG. 2**

**FIG. 3**

**FIG. 4**

**FIG. 5**

Y

Intersection
point

v0                                                    v1

                                                          X

CW

                                            601

v2

**FIG. 6**

Y                v2

CCW              701

v0

                              X

Intersection
point

                    v1

**FIG. 7**

Y

Intersection            v0
point

v1

                              X

CCW              801

v2

**FIG. 8**

**FIG. 9**

## 200

| Projecting a ray and a triangle onto a plane coordinate system | 210 |

| Determining, according to an FMA operation, barycentric coordinates corresponding to an intersection point of the ray and the plane coordinate system | 220 |

| Determining, according to the barycentric coordinates, whether the triangle is hit by the ray | 230 |

**FIG. 10**

A[0]　　　　　　　　B[0]　　　　　　A[1]　　　　　　　　B[1]

FP32　　　　　　　FP32　　　FP32　　　　　　　FP32

Multiplier
510

Multiplier
520

s1.e9.m2.46　　　　s1.e9.m2.46

Inversion 540

Shifting 550　　　　　　Shifting 550

Adder 530

s1.e9.m3.46

Normalization and
rounding 560

FP32

**FIG. 11**

300

## Apparatus for ray tracing

310

First processing section

320

Second processing section

**FIG. 12**

## INTERNATIONAL SEARCH REPORT

| | |
|---|---|
| International application No. | |
| | **PCT/CN2024/090693** |

**A. CLASSIFICATION OF SUBJECT MATTER**

G06T15/06(2011.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS: CNTXT; DWPI; VEN; USTXT; EPTXT; CNKI; IEEE; 必应, BING: 光线追踪, 公共边, 公共顶点, 相交测试, ray tracing, common edge, common vertex, intersection test

**C. DOCUMENTS CONSIDERED TO BE RELEVANT**

| Category* | Citation of document, with indication, where appropriate, of the relevant passages | Relevant to claim No. |
|---|---|---|
| X | US 2020193683 A1 (ADVANCED MICRO DEVICES, INC.) 18 June 2020 (2020-06-18) description, paragraphs 11, 41, 56-57, 61-65, 69, 74-76, 80-83, and 90-91 | 1-24 |
| X | CN 115115759 A (IMAGINATION TECHNOLOGIES LIMITED) 27 September 2022 (2022-09-27) description, paragraphs 6, 22-36, 57-72, and 202-207 | 1-3, 6-24 |
| Y | CN 115115759 A (IMAGINATION TECHNOLOGIES LIMITED) 27 September 2022 (2022-09-27) description, paragraphs 6, 22-36, 57-72, and 202-207 | 4-5 |
| Y | GB 202202657 D0 (IMAGINATION TECHNOLOGIES LIMITED) 13 April 2022 (2022-04-13) description, paragraph 72 | 4-5 |
| A | US 2022207690 A1 (APPLE INC.) 30 June 2022 (2022-06-30) entire document | 1-24 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 June 2024** | **03 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090693**

| Patent document cited in search report | | | Publication date (day/month/year) | Patent family member(s) | | | Publication date (day/month/year) |
|---|---|---|---|---|---|---|---|
| US | 2020193683 | A1 | 18 June 2020 | US | 2020302677 | A1 | 24 September 2020 |
| | | | | US | 10692271 | B1 | 23 June 2020 |
| | | | | US | 11393157 | B2 | 19 July 2022 |
| CN | 115115759 | A | 27 September 2022 | EP | 4064200 | A2 | 28 September 2022 |
| | | | | EP | 4064200 | A3 | 26 October 2022 |
| | | | | GB | 202104063 | D0 | 05 May 2021 |
| | | | | GB | 2599186 | A | 30 March 2022 |
| | | | | GB | 2599186 | A9 | 15 June 2022 |
| | | | | GB | 2599186 | B | 12 October 2022 |
| | | | | US | 2022351458 | A1 | 03 November 2022 |
| | | | | US | 11682161 | B2 | 20 June 2023 |
| | | | | CN | 115115759 | B | 26 December 2023 |
| | | | | CN | 117689794 | A | 12 March 2024 |
| GB | 202202657 | D0 | 13 April 2022 | GB | 2616051 | A | 30 August 2023 |
| | | | | GB | 2616051 | B | 14 February 2024 |
| US | 2022207690 | A1 | 30 June 2022 | US | 12002190 | B2 | 04 June 2024 |
| | | | | GB | 202308363 | D0 | 19 July 2023 |
| | | | | GB | 2615973 | A | 23 August 2023 |
| | | | | WO | 2022146662 | A1 | 07 July 2022 |
| | | | | KR | 20230098635 | A | 04 July 2023 |
| | | | | DE | 112021006708 | T5 | 02 November 2023 |
| | | | | CN | 116686012 | A | 01 September 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310493798